# EUROPEAN PATENT SPECIFICATION

(11) **EP 1 933 585 B1**
(45) Date of publication and mention of the grant of the patent: **24.03.2010**
(21) Application number: 08151643.7
(22) Date of filing: 06.08.2004
(51) Int. Cl.: H04W 8/18

(54) **Method and system for activating a set of services on a wireless device**
Verfahren und System zum Aktivieren einer Gruppe von Diensten auf einer drahtlosen Vorrichtung
Procédé et système pour activer un ensemble de services sur un dispositif sans fil

(43) Date of publication of application: 18.06.2008
(62) Divisional of application: 04103810.0
(73) Proprietor: Research In Motion Limited, Waterloo, Ontario N2L 3W8 (CA)
(72) Inventor: Smith, Christopher, Burlington Ontario L7R 2P3 (CA); Kruis,David, Kitchener Ontario N2K 1T4 (CA); Chin, Jerry, Waterloo Ontario N2L 3W8 (CA); Gilhuly, Barry, Waterloo Ontario N2L 3W8 (CA)
(74) Representative: Patel, Binesh

(56) References cited:
- WO-A-2004/062248
- US-A1- 2004 082 346

## Description

This invention relates generally to the field of service provisioning for wireless devices, and more specifically, to activating a set of services on a wireless device using subscriber identity module ("SIM") information.

Current generations (e.g., "2.5G" and "3G") of wireless mobile communication devices, such as the BlackBerry® handheld developed by Research In Motion Ltd. (RIM®), include microprocessors, information storage capability, and run one or more software applications. Examples of software applications used in these wireless devices include micro-browsers, address books, and email clients. Additionally, this generation of wireless device has access to a plurality of services via the Internet. A 3G wireless device may, for example, be used to browse web sites on the Internet, to transmit and receive graphics, and to execute streaming audio and/or video applications. The transfer of Internet content to and from wireless device is typically facilitated by the Wireless Application Protocol ("WAP"), which integrates the Internet and other networks with wireless network platforms.

Before a consumer can use a wireless device, a number of parameters must be provisioned into the wireless device in order to enable communication services and applications and in order to distinguish the wireless device from others within the communications network. Provisioning may typically include programming the wireless device with a telephone number and programming the wireless network with the serial number and telephone number of the wireless device. Thus programmed, the wireless device and wireless network are enabled to carry calls between the wireless device and the public switched telephone network ("PSTN"). Provisioning may also include programming the wireless network and wireless device to support one or more optional features for the wireless device, such as call forwarding, three-way calling, voice messaging, short messaging, email forwarding, and paging.

Traditionally, provisioning of a wireless device has been performed on the premises of the vendor or distributor of the wireless device. A data port on the wireless device is used to connect the device to a programming system that uploads provisioning data into the wireless device, such as the telephone number assigned to the wireless device, in order to program it for use on the wireless network. Alternatively, the wireless device is programmed through its key pad. This approach requires the often undesirable step of provisioning the wireless device before it can be delivered to a subscriber.

The ability to deliver a wireless device directly to a subscriber without first having to provision the wireless device provides improved speed of delivery to the subscriber and a simplified provisioning process. As such, wireless service providers can sell their wireless devices directly to potential subscribers through, for example, display booths in supermarkets and department stores.

To facilitate such direct sales to potential subscribers, and to make wireless services as convenient and as affordable as possible, over-the-air ("OTA") service provisioning was introduced. In OTA provisioning, simple instructions are provided to guide the buyer through the process of activating the wireless device and signing up for wireless services to become a subscriber. For example, the buyer can activate a new wireless device and sign up for service by dialling a predetermined number (e.g., "*228xx") in accordance with the wireless device's instructions. Dialling the predetermined number on the wireless device keypad automatically initiates a special purpose call that connects the buyer to an operator. The operator requests certain account information from the buyer, such as personal information, a credit card number, and a home billing address. When the account information is collected and the account is set up, the operator instructs the buyer to enter a sequence of passwords, code numbers, menu-selected commands, etc., that enable certain functions in the wireless device.

To automate service provisioning even further, service provisioning solutions now allow at least part of the OTA service provisioning process to be performed by accessing a provisioning server from an unprovisioned wireless device via an Internet connection. Using an Internet connection allows a wireless service provider to consolidate service provisioning applications and data in a central repository.

In addition to provisioning the wireless device, it is also necessary to provision elements in the wireless communications network which are responsible for effecting mobile communications services and applications (e.g., billing plan, voice mail, call forwarding, email, information services, etc.). These elements include servers and other network devices maintained by wireless carriers, service providers ("SPs"), value added resellers ("VARs"), and mobile virtual network operators ("MVNOs").

A wireless carrier or wireless network operator typically owns and operates a wireless network including radio equipment, base stations, antennae, interface equipment, servers, associated landlines, etc. A carrier also manages basic billing and other back-end services needed to sell wireless services to subscribers. The carrier may sell wireless services directly to subscribers in which case the carrier is also a SP. The carrier may also partner with a VAR, a form of SP who sells the carrier's services and may also provide certain additional services. In addition, the carrier may sell otherwise unused network capacity to one or more MVNOs. A MVNO is a SP that does not maintain its own wireless network (i.e., radio equipment). MVNOs may include large retailers, cable operators, and consumer goods companies with important brands. Unlike SPs and VARs, MVNOs offer their own unique content or marketing cachet to subscribers and often serve specific target markets or interests. MVNOs enable carriers to attract new market segments and thereby load their networks more fully. Carriers can devolve marketing, sales, billing, customer relations, and related front and back office functions to MVNOs who may provide these functions more efficiently for their target markets than can the carriers themselves. Thus, SPs, VARs, and MVNOs have similar and often overlapping roles.

One shortcoming of present provisioning systems is that they are carrier focused. They do not address the increase in the number of SPs, VARs, and MVNOs on a carrier's network nor the integration of networks of multiple carriers. In particular, present provisioning systems do not effectively extend the ability to control access and services beyond the carrier to MVNOs, VARs, and other SPs.

The system disclosed by US2004/0082346 is a provisioning system having a backend server for enhanced services for use by an operator of a mobile communication system. The provisioning system, which is generally provided for automatic detection and registration of non-provisioned enhanced-service capable mobile units in the mobile communication system, automatically updates an operator's directory or register of service capable mobile units, thereby enabling usage of the enhanced services for a provisioned, i.e. configured and registered, mobile unit. The provisioning system typically includes a configuration center and an enhanced-service center. As such, US2004/0082346 does not disclose a means for activating services specified by a distinct service provider system through a provisioning system coupled to a carrier system for accessing a wireless network.

A need therefore exists for an improved method and system for activating a set of services on a wireless device. Accordingly, a solution that addresses, at least in part, the above and other shortcomings is desired.

### GENERAL

According to one aspect of the invention, there is provided a method for activating a set of services on a wireless device. The set of services are specified by a service provider. The method comprises receiving at a relay system of a distributed provisioning system a registration message transmitted from the wireless device over a wireless network. The registration message is forwarded from the relay system of the distributed provisioning system to a provisioning system. At the provisioning system a carrier profile based on a carrier identifier contained within the registration message is determined and a service provider based on the carrier profile and a service provider identifier contained within the registration message are identified. The set of services based on the service provider identifier is identified and a service book containing a service profile having information for activating the set of services is transmited to the wireless device over the wireless network.

According to another aspect of the invention, there may be provided a mobile wireless device operable within a wireless network, said mobile device having a computer readable medium tangibly embodying computer code executable on a processor of said mobile device for controlling said mobile device to: provide to a relay of a distributed provisioning system a registration message containing a carrier identifier for determining a carrier profile and further containing a service provider identifier for identifying a service provider based on both the carrier profile and the service provider identifier; and receive from said distributed provisioning system a service profile having information for activating a set of services specified by the service provider.

According to another aspect of the invention, there may be provided a method for provisioning wireless devices for use of services offered by service providers through carriers on a wireless network, comprising: receiving at a provisioning system from a wireless device a service provider identifier and a carrier identifier; identifying a set of services provided by a service provider with the service provider identifier, the service provider being associated with a carrier; and transmitting to the wireless device a service profile having provisioning information for the set of services. The service profile may comprise a web site address for accessing a site hosted by the provisioning system and associated with the service provider for downloading the provisioning information for the set of services. The method may further comprise identifying for the carrier the service provider for the set of services. The method may further comprise determining whether the service provider is associated with the carrier by comparing the service provider identifier to a list of associated service provider identifiers corresponding to the carrier identifier. The method may further comprise if the service provider is not associated with the carrier, identifying a set of services provided by the carrier with the carrier identifier. The site may be associated with the carrier. The service provider and carrier identifiers may be stored in a memory device of the wireless device. The memory device may be a subscriber identity module (SIM). The carrier identifier may be stored in one or more of a mobile country code (MCC) field and a mobile network code (MNC) field stored in the subscriber identity module (SIM). The web site address may be a uniform resource locator (URL). The set of services may comprise electronic mail services. The method may further comprise enabling the set of services in the provisioning system for the service provider. The provisioning system may be operated by a second service provider.

According to another aspect of the invention, there may be provided a system for provisioning wireless devices for use of services offered by service providers through carriers on a wireless network, comprising: a processor coupled to memory and an interface to the wireless network and adapted for implementing the method described in this document.

According to another aspect of the invention, there may be provided a computer program product having a computer readable medium tangibly embodying computer executable code for directing a provisioning system to provision wireless devices for use of services offered by service providers through carriers on a wireless network, said computer program product comprising: code for implementing the method described in this document.

According to another aspect of the invention, there may be provided a mobile wireless device operable within a wireless network, said mobile device having a computer readable medium tangibly embodying computer code executable on a processor of said mobile device for controlling said mobile device to provide to a wireless device provisioning system a service provider identifier and a carrier identifier and to receive from said provisioning system a service profile having provisioning information for a set of services offered by a service provider through a carrier on said wireless network.

Further aspects of the invention such as a computer readable medium having program instructions recorded thereon for practising the method of the invention will be apparent from the appended claims.

### BRIEF DESCRIPTION OF THE DRAWINGS

Further features and advantages of the embodiments of the present invention will become apparent from the following detailed description, taken in combination with the appended drawings, in which:

FIG. 1 is a block diagram illustrating an exemplary provisioning system adapted for implementing an embodiment of the invention;

FIG. 2 is a block diagram illustrating a wireless network environment including the provisioning system in accordance with an embodiment of the invention;

FIG. 3 is block diagram illustrating the general structural relationships which may exist within a SIM between MF, DF, and EF files;

FIG. 4 is a table illustrating the structure of the EFGID1 file;

FIG. 5 is a table illustrating the structure of the EFGID2 file;

FIG. 6 is a flow chart illustrating operations of modules within a provisioning system for supporting multiple VARs, MVNOs, or SPs with EFGID information in accordance with an embodiment of the invention; and,

FIG. 7 is a flow chart illustrating operations of modules within a provisioning system for the management of subscribers by VARs, MVNOs, or SPs in accordance with an embodiment of the invention.

It will be noted that throughout the appended drawings, like features are identified by like reference numerals.

### DESCRIPTION OF PREFERRED EMBODIMENTS

The following detailed description of the embodiments of the present invention does not limit the implementation of the invention to any particular computer programming language. The present invention may be implemented in any computer programming language provided that the operating system ("OS") provides the facilities that may support the requirements of the present invention. A preferred embodiment is implemented in the JAVA^{™} computer programming language (or other computer programming languages such as C or C++). (JAVA and all JAVA-based trademarks are the trademarks of Sun Microsystems Corporation.) Any limitations presented would be a result of a particular type of operating system or computer programming language and would not be a limitation of the present invention.

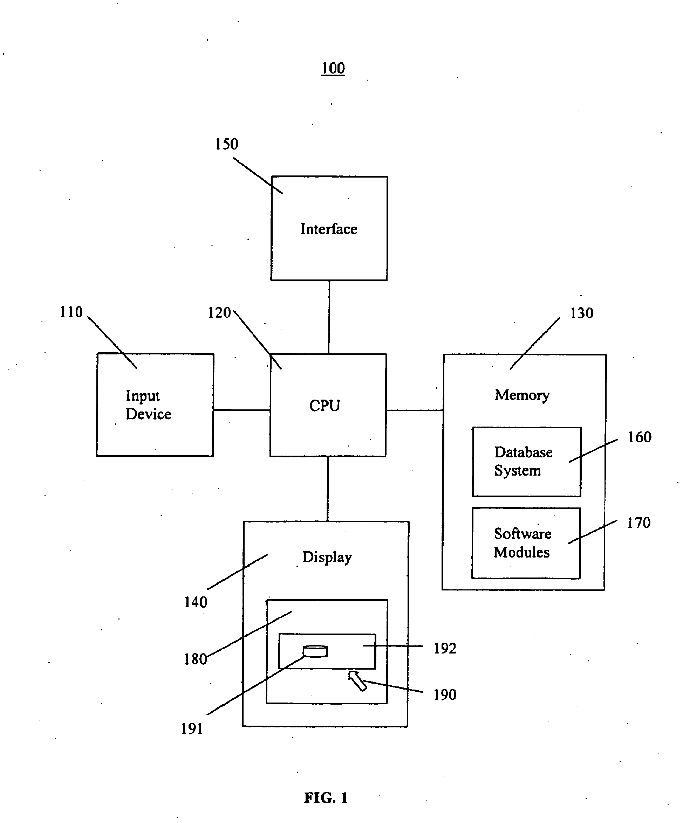

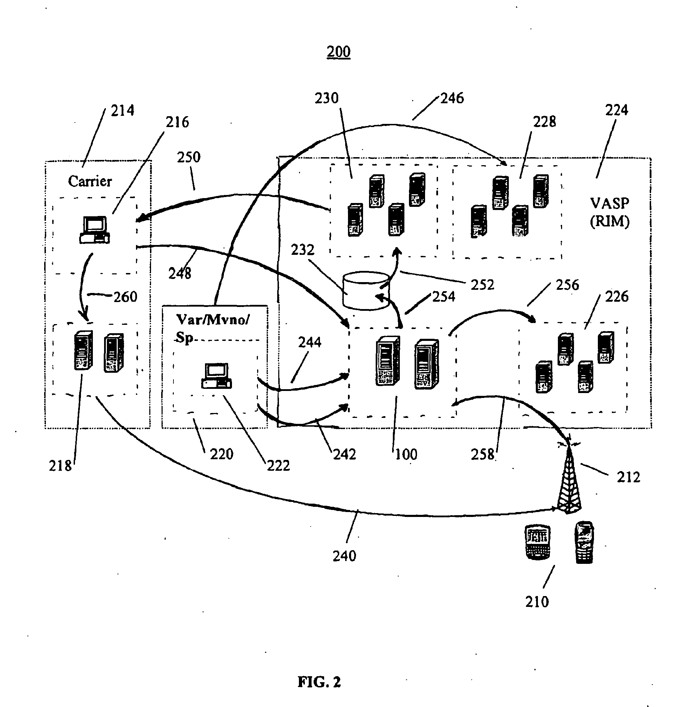

FIG. 1 is a block diagram illustrating an exemplary provisional system **100** adapted for implementing an embodiment of the invention. The provisioning system **100** includes an input device **110**, a central processing unit or CPU **120**, memory **130**, a display **140**, and an interface **150**. The input device **110** may include a keyboard, mouse, trackball, remote control, or similar device. The CPU **120** may include dedicated coprocessors and memory devices. The memory **130** may include RAM, ROM, or disk devices. The display **140** may include a computer screen, terminal device, or a hardcopy producing output device such as a printer or plotter. And, the interface **150** may include a network connection including an Internet connection. The provisioning system **100** is adapted for provisioning wireless devices **210** in a wireless network environment **200**(see FIG. 2).

The provisioning system **100** may be a server system or a personal computer ("PC") system. The CPU **120** of the data provisioning system **100** is operatively coupled to memory **130** which stores an operating system (not shown), such as IBM Corporation's OS/2™, UNIX, etc., for general management of the system **100.** The interface **150** may be used for communicating to external data processing systems through a network (see FIG. 2), such as the Internet. Examples of suitable platforms for the provisioning system **100** include iSeries^{™} servers and ThinkCentre™ personal computers available from IBM Corporation. The provisioning system **100** may include application server software (not shown), such as WebLogic® Server available from BEA Systems, Inc., for developing and managing distributed applications.

The provisioning system **100** may include a database system **160** for storing and accessing programming information. The database system **160** may include a database management system ("DBMS") and a database and is stored in the memory **130** of the provisioning system **100**. It will be appreciated that the database system **160** may be shipped or installed without the database to or by end users. In general, the DBMS is adapted to read a query generated by the provisioning system **100** in response to a request for information submitted by a user typically through a user interface. The DBMS then executes the query against the database and provides a query result to the provisioning system **100** for presentation to the user. It will be appreciated that the database system **160** may be stored in the memory **130** of the provisioning system **100** or stored in a distributed provisioning system (see FIG. 2).

Examples of suitable DBMSs include the Oracle® and DB2™ Universal Database Management System products available from Oracle Corporation and IBM Corporation, respectively. The DBMS is a software layer interposed between the actual database (i.e. the data as stored for use by the CPU **120** of the system **100**) and the users of the system. The DBMS is responsible for handling database transactions thus shielding users from the details of any specific computer hardware or database implementation. Using relational techniques, the DBMS stores, manipulates and retrieves data in the form of table-like relations typically defined by a set of columns or attributes of data types and a set of rows (i.e. records or tuples) of data. The standard database query language for dealing with relational databases implemented by most commercial DBMSs is the Structured Query Language ("SQL").

The provisioning system **100** includes computer executable programmed instructions for directing the system **100** to implement the embodiments of the present invention. The programmed instructions may be embodied in one or more software modules **170** resident in the memory **130** of the provisioning system **100**. Alternatively, the programmed instructions may be embodied on a computer readable medium (such as a CD disk or floppy disk) which may be used for transporting the programmed instructions to the memory **130** of the provisioning system **100**. Alternatively, the programmed instructions may be embedded in a computer-readable, signal-bearing medium that is uploaded to a network by a vendor or supplier of the programmed instructions, and this signal-bearing medium may be downloaded through the interface **150** to the provisioning system **100** from the network by end users or potential buyers.

The CPU **120** of the system **100** is typically coupled to one or more devices **110** for receiving user commands or queries and for displaying the results of these commands or queries to the user on a display **140**. For example, user queries may be transformed into a combination of SQL commands for producing one or more tables of output data which may be incorporated in one or more display pages for presentation to the user. The CPU **120** is coupled to memory **130** for containing programs **170** and data such as base tables or virtual tables such as views or derived tables. As mentioned, the memory **130** may include a variety of storage devices including internal memory and external mass storage typically arranged in a hierarchy of storage as understood to those skilled in the art.

A user may interact with the provisioning system **100** and its software modules **170** using a graphical user interface ("GUI") **180**. The GUI **180** may be web-based and may be used for monitoring, managing, and accessing the provisioning system **100.** GUIs are supported by common operating systems and provide a display format which enables a user to choose commands, execute application programs, manage computer files, and perform other functions by selecting pictorial representations known as icons, or items from a menu through use of an input or pointing device such as a mouse **110**. In general, a GUI is used to convey information to and receive commands from users and generally includes a variety of GUI objects or controls, including icons, toolbars, drop-down menus, text, dialog boxes, buttons, and the like. A user typically interacts with a GUI **180** presented on a display **140** by using an input or pointing device (e.g., a mouse) **110** to position a pointer or cursor **190** over an object **191** and by "clicking" on the object **191**.

Typically, a GUI based system presents application, system status, and other information to the user in "windows" appearing on the display **140**. A window **192** is a more or less rectangular area within the display **140** in which a user may view an application or a document. Such a window **192** may be open, closed, displayed full screen, reduced to an icon, increased or reduced in size, or moved to different areas of the display **140**. Multiple windows may be displayed simultaneously, such as: windows included within other windows, windows overlapping other windows, or windows tiled within the display area.

FIG. 2 is a block diagram illustrating a wireless network environment **200** including the provisioning system **100** in accordance with an embodiment of the invention. In FIG. 2, the provisioning system **100** is located within a distributed provisioning system **224** which includes a relay system **226**, a web client system **228**, and a customer relationship management ("CRM") database system **230**. The distributed provisioning system **224** is available through RIM®. Of course, the functionality of the relay system **226**, web client system **228**, and CRM database system **230** may be included within the provisioning system **100**.

The CRM database system **230** includes servers for storing and accessing subscriber billing, service provider, and related information. The CRM database system **230** may include CRM applications and enterprise resource planning ("ERP") applications available from SAP® AG. The CRM database system **230** generates invoice messages **250** for carriers **214** (which may also be SPs) and which include information identifying which VARs, MVNOs, or SPs **220** a subscriber or wireless device **210** is associated with.

The provisioning system **100** is interfaced to the CRM database system **230** through a transaction database **232** which is typically an offline queue (i.e., not real-time). The provisioning system **100** passes updated and newly created service contract messages **254** to the transaction database **232**. In turn, the transaction database **232** passes corresponding update messages **252** to the CRM database system **230**.

The web client system **228** includes servers for providing an Internet-based email interface for wireless device subscribers. Through the web client **228**, email is directed to wireless devices **210** over the wireless network **212**. The web client **228** allows subscribers to add email account services for operation through their wireless devices **210**. Email is redirected wirelessly to subscribers' wireless devices **210** so that subscribers can send, receive, forward, and reply to messages wirelessly. In addition, the web client system **228** allows subscribers to access their email account over the Internet with a landline based PC. Each carrier **214** and VAR, MVNO, or SP **220** may have its own web client system **228** site (i.e., a "web client site") for its subscribers. Services provided by the web client site are configurable based on the carrier **214** or VAR/MNVO/SP **220**. Advantageously, not only can carriers **214** access a web client 228 site to manage subscriber setting **246,** but so can VARs, MVNOs, and other SPs **220.**

The relay system **226** includes servers for transferring information between the provisioning system **100** and wireless devices **210** over the wireless network **212**. As discussed above, the wireless network **212** is generally owned and operated by a carrier **214**. It is through the relay system **226** that the provisioning system **100** is coupled to the wireless network **212**. The relay system **226** handles a variety of low level operations for subscribers **210**. The relay system **226** receives registration messages **258** from wireless devices **210** and passes these messages to the provisioning system **100**. In return, the provisioning system **100** passes enable/block service access messages **256** to the relay system **226**.

Each carrier **214** which is a SP has a carrier customer service system **216** which is coupled to a carrier provisioning system **218**. The carrier customer service system **216** may be similar in component configuration to the provisioning system **100** (see FIG. 1). The carrier customer service system **216** provides the carrier provisioning system **218** with activate subscriber messages **260**. In turn, the carrier provisioning system **218** provides activate network service messages **240** to the wireless network **212** for transmission to the distributed provisioning system **224** and/or wireless devices **210**. In addition, and as mentioned above, the carrier customer service system **216** of the carrier **214** receives invoice messages (including VAR/MNVO/SP information) **250** from the CRM database system **230**. Furthermore, the carrier customer service system **216** provides manage VAR/MVNO/SP configuration messages **248** to the provisioning system **100**.

Each VAR/MVNO/SP **220** includes a VAR/MVNO/SP customer service system **222.** The VAR/MVNO/SP customer service system **222** is typically coupled to the distributed provisioning system **224** through landlines. The VAR/MVNO/SP customer service system **222** provides the provisioning system **100** with subscriber service assignment messages **244** and device service assignment messages **242**. In addition, the VAR/MVNO/SP customer service system **222** provides the web client system **228** with manage web client site/subscriber settings messages **246**.

Using their customer service systems **216, 222,** carrier and VAR/MVNO/SP users can log in via a Web based user interface to the distributed provisioning system **224** to manage provisioning aspects of their respective subscribers **210**. The user interface for a VAR/MVNO/SP is similar to that of a carrier, except the VAR/MVNO/SP is only allowed to manage its own subscribers while the carrier can manage any of the subscribers of its associated VARs/MVNOs/SPs. Alternatively, the carrier can be prevented from managing the subscribers of its associated VARs/MVNOs/SPs. This is configurable and is dependent on the relationship between the carrier and its VARs/MVNOs/SPs. Appropriate error messages are provided by the distributed provisioning system **224** when a VAR/MVNO/SP attempts to access another's subscriber.

Thus, the distributed provisioning system **224** acts as an intermediary between carriers **214,** VARs, MVNOs, SPs **220,** and wireless device subscribers **210,** providing email forwarding, related billing, provisioning, and other services. In effect, the distributed provisioning system **100** is a form of SP providing specialized support and services for wireless devices such as the BlackBerry® handheld. RIM® presently acts as such a SP providing provisioning and related services through its BlackBerry® service. As such, SPs such as RIM® are sometimes referred to as value added service providers ("VASPs"). Of course, the BlackBerry® service may be re-branded and offered by other SPs to their subscribers.

The present invention extends the ability to control access and services beyond the carrier **214** to MVNOs, VARs, and similar SPs **220.** According to one embodiment of the invention, this is accomplished using Subscriber Identity Module ("SIM") information to identify subscribers as MVNO, VAR or SP subscribers. A SIM is a small, stamp-sized "smart card" that is used in a Global System for Mobile Communications ("GSM") wireless device **210**. Typically, the SIM contains a microchip that stores data that identifies the subscriber **210** to the carrier **214**. The SIM also stores data used to encrypt voice and data transmissions, phone book information, etc. Typically, the SIM can be removed from a first wireless device and place in a second wireless device. This enables the second wireless device to use information such as the subscriber's telephone and account numbers. The interface between a SIM and a wireless device **210** within a wireless network **212** is defined in European Telecommunications Standards Institute ("ETSI") standard GSM 11.11 Version 6.2.0 Release 1997 ("Digital Cellular Telecommunications System (Phase 2+); Specification of the Subscriber Identity Module - Mobile Equipment (SIM - ME) Interface"), which is incorporated herein by reference.

According to one embodiment of the invention, in a SIM swap scenario as described above, the services associated with the wireless device will be updated if the VAR/MVNO/SP associated with the new SIM has different defaults. Similarly, if a SIM swap does not occur but the SIM information is updated and a re-registration occurs, the wireless device will also be updated.

Now, a carrier **214** can be uniquely identified through the Mobile Country Code ("MCC") and Mobile Network Code ("MNC") assigned to the subscriber and stored in the SIM of the subscriber's wireless device **210.** As described above, a carrier **214** may have relationships with various partners (e.g., VARs, MVNOs, and SPs) **220** who are responsible for a sub-set of subscribers or services. In each case, these partners use the carrier's network resources. Subscribers owned by a partner **220** are identified by the SIM which is typically owned by the carrier **214**. The SIM is able to identify the carrier **214** by the MCC/MNC information contained in the International Mobile Subscriber Identity ("IMSI") file. Often the carrier **214** needs to know which partners **220** are responsible for the services and fees associated with a particular subscriber **210**. Also, the carrier 214 may want to delegate service control to their partner **220** and manage what services are available for default assignment.

According to one embodiment of the invention, the provisioning system **100** (or distributed provisioning system **224**) uses information stored in the Elementary File Group Identifier ("EFGID") file specified by the GSM 11.11 standard to allow for the identification of a subscriber **210** as belonging to a specific MVNO, VAR or SP **220**. A flexible interface **216** is provided to the carrier **214** to define partners **220** and identify EFGID mappings for these partners **220**. Carriers **214** are able to control what services can be assigned by the partner **220** to their subscribers or handsets **210.** MVNOs, VARs and SPs **220** have access to an interface **222** to manage service provisioning and access control for their subscribers within the boundaries set by the carrier **214**. Different VARs/MVNOs/SPs **220** can have different service offerings and different configuration options to brand the end-user experience to their requirements. Also, the partner information is communicated to the carrier **214** for each subscriber as part of the billing and reconciliation process **250**.

To reiterate, multiple VARs/MVNOs/SPs **220** may be supported by using EFGID information. The VARs/MVNOs/SPs **220** associated with a carrier **214** are able to manage their own subscribers **210**. The EFGID information from the SIM is used to identify the VAR/MVNO/SP **220** to which the subscriber **210** belongs. The carrier **214** is also able to have the EFGID and the VAR/MVNO/SP identity appear in the billing comment data **250** that it receives from the distributed provisioning system **224**. Furthermore, the carrier **214** is able to communicate messages **248** to the distributed provisioning system **248** to manage its associated VARs/MVNOs/SPs **220** using, for example, a WebService interface (e.g., XML, SOAP, etc.). Advantageously, by providing the ability to control exactly what services are accessible to the subscriber base, targeted product offerings and pricing for various end-user communities is facilitated.

According to the GSM 11.11 standard, a "file" is a directory or an organized set of bytes or records in the SIM. A Dedicated File ("DF") is a file containing access conditions and, optionally, Elementary Files or other DFs. An Elementary File ("EF") is a file containing access conditions and data and no other files. And, a Master File ("MF") is the unique mandatory file containing access conditions and optionally DFs and/or EFs.

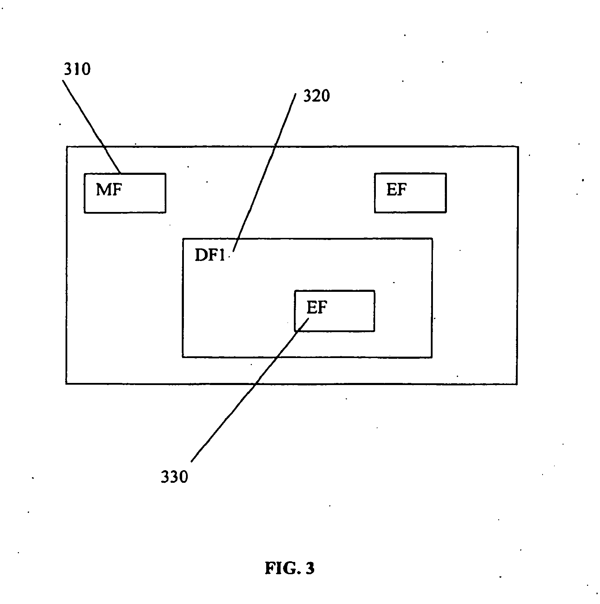

FIG. 3 is block diagram illustrating the general structural relationships which may exist within a SIM between MF **310**, DF **320**, and EF **330** files. In general, files are composed of a header, which is internally managed by the SIM, and optionally a body part. The information of the header is related to the structure and attributes of the file. The body part contains the data of the file. Each EF file **330** is composed of a header and a body part. The following three structures for an EF are used by GSM: transparent, linear fixed, and cyclic.

An EF **330** with a transparent structure consists of a sequence of bytes. When reading or updating, the sequence of bytes to be acted upon is referenced by a relative address (offset), which indicates the start position (in bytes), and the number of bytes to be read or updated. The first byte of a transparent EF has the relative address '00 00'. The total data length of the body of the EF is indicated in the header of the EF.

In addition, EFs may be classified as mandatory or optional. The file size of an optional EF may be zero. All implemented EFs with a file size greater than zero shall contain all mandatory data items. Optional data items may either be filled with 'F', or, if located at the end of an EF, need not exist.

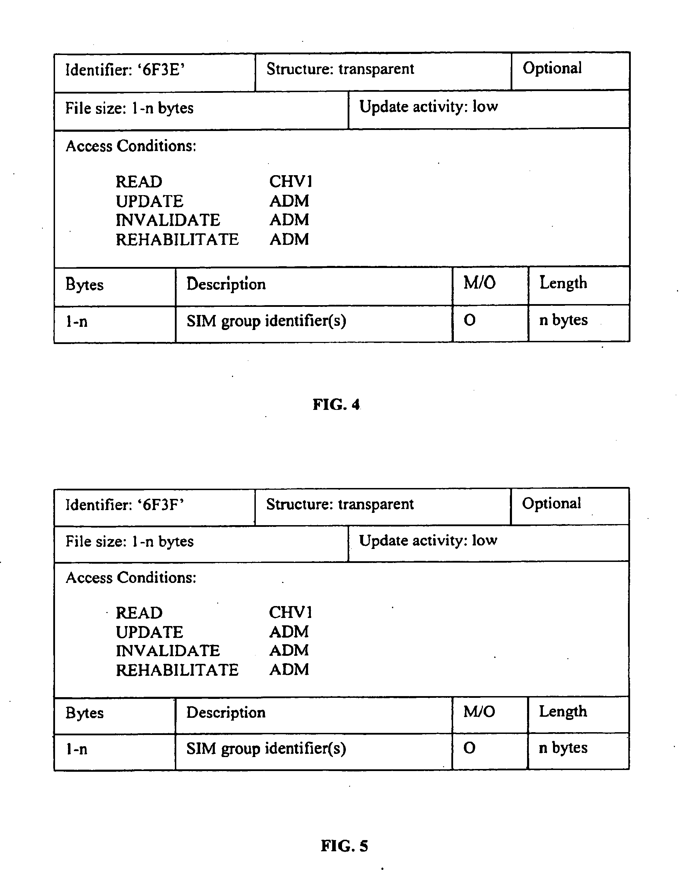

According to the GSM 11.11 standard, there are two EFGID files: EFGID1 (Group Identifier Level 1) and EFGID2 (Group Identifier Level 2). EFGID1 is an EF containing identifiers for particular SIM-ME associations. It can be used to identify a group of SIMs for a particular application. The structure of the EFGID1 file is shown in FIG. 4. Similarly, the EFGID2 is an EF containing identifiers for particular SIM-ME associations. It too can be used to identify a group of SIMs for a particular application. The structure of the EFGID2 file is shown in FIG. 5. Note that the structure of EFGID1 and EFGID2 are identical. They are provided under the GSM 11.11 standard to allow the carrier to enforce different levels of security dependant on application.

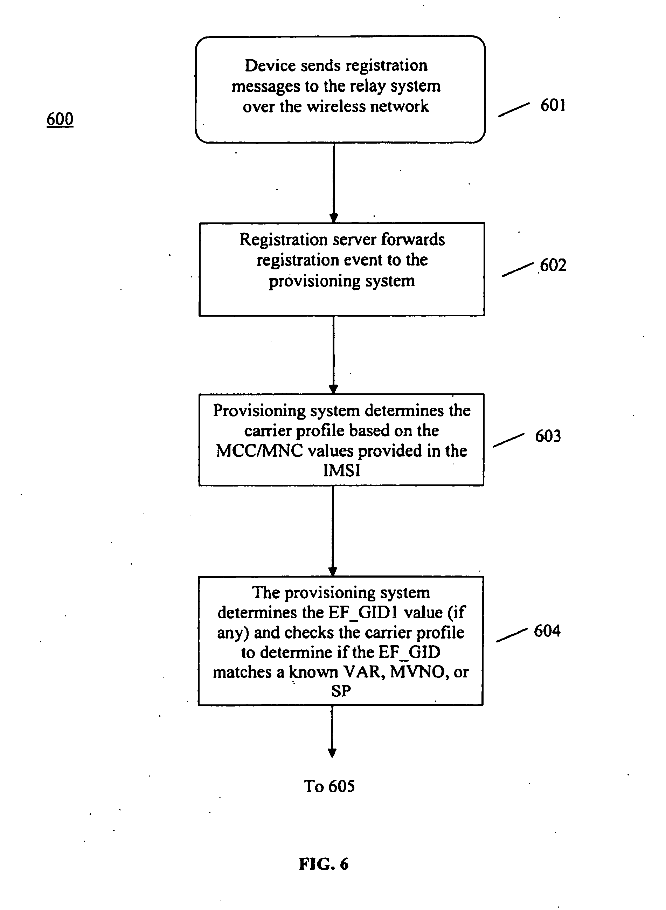

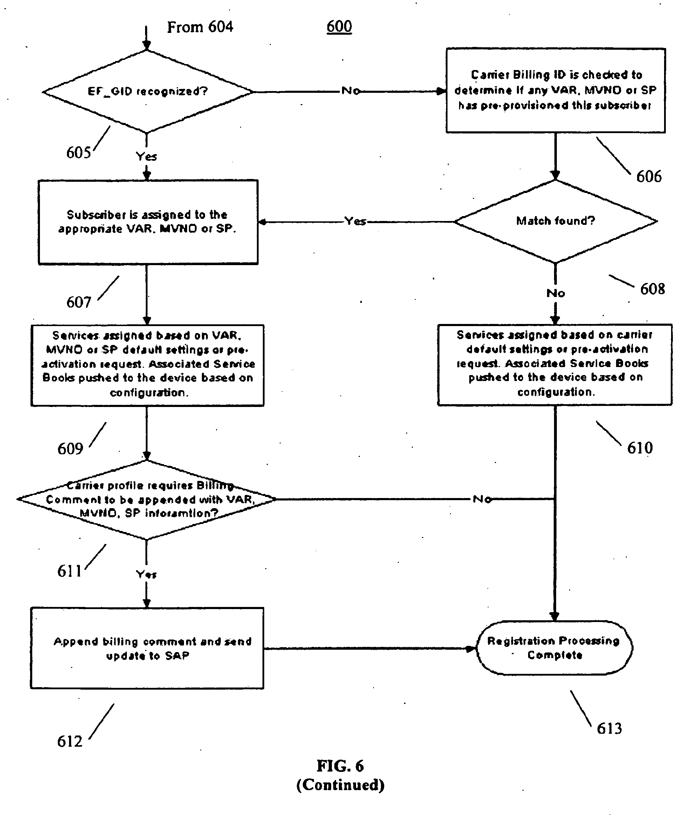

FIG. 6 is a flow chart illustrating operations **600** of modules **170** within a provisioning system **100, 224** for supporting multiple VARs, MVNOs, or SPs **220** with EFGID information in accordance with an embodiment of the invention.

At step **601**, the operations **600** start. The wireless device **210** sends registration messages **258** to the relay system **226** over the wireless network **212**.

At step **602**, a registration server (not shown) in the relay system **226** forwards the registration messages **258** to the provisioning system **100** of the distributed provisioning system **224**.

At step **603**, the provisioning system **100** determines a carrier profile based on the MCC/MNC values provided in the IMSI of the registration messages **258**. The MCC/MNC value may be referred to as a "carrier identifier".

At step **604,** the provisioning system **100** determines the EFGID1 value (if any) from the registration messages **258** and checks the carrier profile to determine if the EFGID1 value matches a known VAR, MVNO, or SP **220.** The EFGID1 value may be referred to as a "service provider identifier".

At step **605,** a determination is made as to whether the EFGID1 value is recognized.

At step **606,** if the EFGID1 value is not recognized **605,** then a carrier billing ID is checked to determine if any VAR, MVNO, or SP **220** has pre-provisioned the subscriber **210.**

At step **607,** if the EFGID1 value is recognized **605,** then the subscriber **210** is assigned to the appropriate VAR, MVNO, or SP **220**.

At step **608**, a determination is made as to whether any VAR, MVNO, or SP **220** has pre-provisioned the subscriber **210**. If the subscriber **210** has been pre-provisioned, operations proceed to step **607**.

At step **610**, if the subscriber **210** has not been pre-provisioned **608**, then services are assigned based on carrier default settings or a pre-activation request. Associated service books are pushed **240** to the wireless device **210** based on the corresponding configuration. A service book contains information that informs the wireless device **210** about how to interact with the provisioning system **100**, **224** and allows the different services that can be enabled for the wireless device **210**. Thus, service books provide the wireless device **210** with a service profile.

At step **609**, continuing from step **607**, services are assigned based on VAR, MVNO, or SP default settings or a pre-activation request. Associated service books are pushed **240** to the wireless device **210** based on the corresponding configuration.

At step **611**, a determination is made as to whether the carrier profile requires a billing comment **250** to be appended with VAR, MVNO, and SP information. If no billing comment is required, operations proceed to step **613**.

At step **612**, if a billing comment is required, the billing comment is appended and the CRM database system **230** is updated accordingly.

At step **613**, the operations 600 end with the completion of registration processing.

Modules **170** within the provisioning system **100, 224** contain additional operations for supporting multiple VARs/MVNOs/SPs **220** with EFGID information. In particular, a carrier **214** (i.e., an administrator associated with the carrier) can specify via a Web interface to the provisioning system **100**, **224** a variety of information pertaining to its profile. The carrier **214** with a VAR/MVNO/SP **220** can specify the length of the EFGID field in the SIM in terms of bytes. Once the length is determined, all EFGID values are expressed as the hex representation of that sequence of bytes, including leading 0s. In addition, the carrier **214** can specify if the EFGID value, or the corresponding VAR/MVNO/SP name, or both should be appended to the billing comment **250.** A field delimiting string may be specified as well.

In addition, operations are provided for allowing a carrier **214** to create a VAR/MVNO/SP **220.** A carrier **214** can log in via a Web interface to the provisioning system **100, 224** and create **248** a VAR/MVNO/SP **220** and assign to it one or more unique EFGID values (HEX strings). A VAR/MVNO/SP **220** may have more than one EFGID value assigned to it. The EFGID value specified is actually the EFGID1 value stored in a subscriber's SIM. According to the GSM 11.11 standard, as discussed above, the EFGID1 field is an optional EF in a SIM that may contain 1 to n bytes (see FIG. 4). The carrier **214** can then proceed to create an administration account for the VAR/MNVO/SP **220**. The carrier **214** has complete control over the VAR/MNVO/SP **220.** For example, the carrier **214** can create or remove a VAR/MVNO/SP **220** that belongs to it. In addition, the carrier **214** can manage (i.e., activate, deactivate, suspend, resume, etc) any subscriber **210** of any VAR/MVNO/SP **220.** Alternatively, a configuration setting can allow the carrier **214** to select which EF in the SIM to use for VAR/MVNO/SP **220** identification.

A VAR/MVNO/SP **220** (i.e., an administrator associated with the VAR/MVNO/SP) can create additional accounts. A VAR **220** can log in via a Web interface to the provisioning system **100**, **224** and create additional accounts (e.g., Manager and Support Staff) and assign permissions to each account **242, 244.**

In addition, a VAR/MNVO/SP **220** can manage its own subscribers **210.** Each VAR/MVNO/SP **220** has access to only its subscribers **210.**

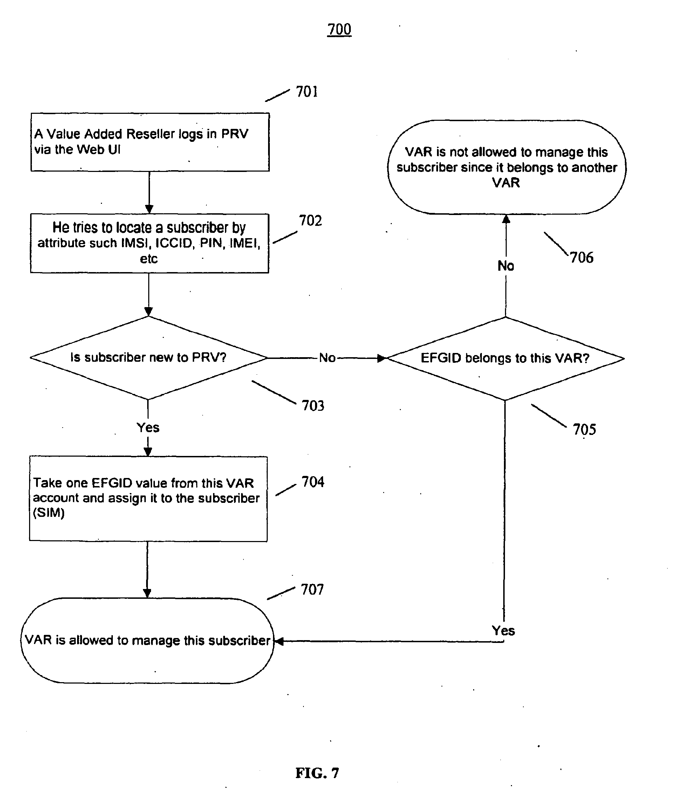

FIG. 7 is a flow chart illustrating operations **700** of modules **170** within a provisioning system **100, 224** for the management of subscribers **210** by VARs, MVNOs, or SPs **220** in accordance with an embodiment of the invention.

At step **701**, the operations **700** start. A VAR/MNVO/SP **220** logs in via a Web interface to the provisioning system **100**, **224**.

At step **702**, the VAR/MNVO/SP **220** attempts to locate a subscriber **210** by checking attributes such as IMSI, ICCID (Integrated Circuit Card Identifier), PIN (Personal Identification Number), IMEI (International Mobile Equipment Identity), etc.

At step **703**, a determination is made as to whether the subscriber **210** is new to the provisioning system 1**0**0, **224**.

At step **704**, if the subscriber **210** is new **703** to the provisioning system **100**, **224** then one EFGID value is selected from the VAR/MVNO/SP account and assigned to the subscriber's SIM.

At step **705**, if the subscriber **210** is not new **703** to the provisioning system **100**, **224**, then a determination is made as to whether the EFGID value belongs to the VAR/MVNO/SP **220**. If the EFGID belongs to the VAR/MVNO/SP **220,** operations continue to step **707**.

At step **706,** if the EFGID does not belong to the VAR/MNVO/SP **220,** the VAR/MVNO/SP **220** is not allowed to manage the subscriber **210** since the subscriber **210** belongs to another VAR/MNVO/SP **220.**

At step **707**, continuing from steps **704** or **705**, the operations **700** end with the VAR/MNVO/SP **220** being allowed to manage the subscriber **210**.

A VAR/MNVO/SP **220** can also manage its subscribers **210** via a WebService interface (e.g., XML, SOAP, etc.) to the provisioning system **100**, **224**. As long as the subscriber **210** belongs to the VAR/MNVO/SP **220**, or the subscriber **210** is new (i.e., before registration), the VAR/MNVO/SP **220** can perform actions such as activate, suspend, resume, deactivate, assign, change billing id or status for its subscriber **210**.

As mentioned, operations are provided for allowing a billing comment change upon registration. The carrier **214** can select to append an EFGID value or the corresponding VAR/MNVO/SP name to a billing comment. If the provisioning system **100, 224** detects a change of EFGID upon registration, the billing comment is changed to reflect the latest EFGID value or VAR/MVNO/SP name.

Furthermore, operations are provided for web client site verification. As mentioned, each VAR/MVNO/SP **220** can have it own web client site, which may or may not be the same as the carrier's web client site. Each VAR/MNVO/SP can choose to create a web client account either on its web client site or on the carrier's web client site. When a subscriber registers, the provisioning system **100, 224** pushes the VAR/MNVO/SP's S service book to the subscriber's wireless device **210**, if a web client account was created prior to registration. Otherwise, the carrier's service book is pushed. When a subscriber tries to set up a web client account via the web client system's Web user interface, the provisioning system **100**, **224** ensures that the web client site of the subscriber corresponds to that of its VAR/MNVO/SP **220** or its carrier **214**.

With respect to supporting multiple VARs/MVNOs/SPs with EFGID information, note that the EFGID information is retrieved by the relay system **226.** The EFGID1 and EFGID2 fields are optional parameters (1 to n bytes) stored in a SIM. The relay system **226** encodes EFGID1 and EFGID2 information in Base64 and sends this information **258** to the provisioning system **100**. A registration interface of the provisioning system **100** decodes the EFGID1 field with Base64. The EFGID2 value is not used and is discarded. In addition, the registration interface discards all invalid EFGID1 values. The registration interface determines the VAR/MVNO/SP based on the IMSI and EFGID1 values and passes the validated EFGID value to downstream components **230.**

Based on EFGID information, subscribers are provided with specific, configurable service books (i.e., for WAP, browsing, etc.). In addition, the provisioning system **100**, **224** allows for the assignment of a separate web client site to each VAR/MVNO/SP **220** associated with a particular carrier **214**. Moreover, a user interface to the provisioning system **100**, **224** is provided allowing a carrier **214** to have super-user control over all VARs/MVNOs/SPs **220** under its control umbrella. The user interface also allows each carrier **214** to specify its particular EFGID1 format, specifically the number of bytes the carrier **214** stores in the SIM of its wireless devices **210**. In addition, the user interface allows each carrier **214** to create a VAR/MVNO/SP **220** and associate to that VAR/MVNO/SP **220** a valid EFGID value.

According to the present invention, carriers **214** and VARs/MVNOs/SPs **220** receiving services from the provisioning system **100**, **224** receive enhancement accounting bills, typically on a monthly basis. These bills include EFGID information including VAR/MVNO/SP name, typically as a billing comment. The registration interface of the provisioning system **100** ensures that the proper billing comment is created and used.

Consider the following example of the operation of the present invention. As preconditions, a profile is created in the provisioning system **100, 224** for a carrier named "T-Mobile Germany". The MCC/MNC mapping for T-Mobile Germany is configured for MCC = 262 and MNC =010-019. Associated with the carrier is a VAR named "Debitel" which is assigned EFGID1 =12. The carrier is configured with default services entitled "Enterprise" and "Prosumer" and has a web client site entitled "tmode". The VAR is configured with default services "Prosumer Only" service and has a web client site entitled "debitel". The billing comment for the carrier is configured as "Other" with "Value Added Reseller Name" and "ID" included in an "Extra" field.

Now, in operation, the following steps are performed:
1. A wireless device **210** having IMSI = 262011743013951 and EFGID1 = 12 registers with the relay system **226** of the distributed provisioning system **224**;
2. A corresponding registration event is received by the provisioning system **100**;
3. The provisioning system **100** retrieves the carrier's profile based on MCC=262 and MNC=011;
4. The provisioning system **100** retrieves the VAR's profile based on EFGID1 =12;
5. "Prosumer Only" service is activated for the wireless device **210** (i.e., subscriber) based on the VAR's profile;
6. The provisioning system **100** sends a service book (or profile) to the wireless device **210** which contains configuration settings for all services to be enabled for the subscriber. One element of the service book (or profile) is a VAR specific (i.e., "debitel") web client site address (e.g., a uniform resource locator ("URL")) for self-provisioning of the wireless device **210;** and,
7. The CRM database system **230** is updated with a "Billing Comment" for the carrier of "12 - Debitel". In addition, the services are enabled in the provisioning system **100**, **224** for the subscriber.

Advantageously, the present invention supports a unique relationship between carriers **214** and VARs, MVNOs, or SPs **220** in which the carrier **214** can be billed by an intermediary **224**, for services such a email forwarding, etc., rather than the subscriber **210** directly. At the same time, each VAR, MVNO, or SP **220** can manage its subscribers **210** through its own web client site.

While this invention is primarily discussed as a method, a person of ordinary skill in the art understands that the apparatus discussed above with reference to a provisioning system may be programmed to enable the practice of the method of the invention. Moreover, an article of manufacture for use with a provisioning system, such as a prerecorded storage device or other similar computer readable medium including program instructions recorded thereon may direct the provisioning system to facilitate the practice of the method of the invention. It is understood that such apparatus and articles of manufacture also come within the scope of the invention.

The embodiment(s) of the invention described above is(are) intended to be exemplary only. The scope of the invention is therefore intended to be limited solely by the scope of the appended claims.

## Claims

1. A method for activating a set of services on a wireless device (210), the set of services being specified by a service provider (220), the method comprising:
receiving at a relay system (226) of a distributed provisioning system (224) a registration message (258) transmitted from the wireless device (210) over a wireless network (212);
forwarding the registration message from the relay system (226) of the distributed provisioning system (224) to a provisioning system (100);
determining at the provisioning system (100) a carrier profile based on a carrier identifier contained within the registration message;
identifying at the provisioning system (100) a service provider based on the carrier profile and a service provider identifier contained within the registration message (258);
identifying the set of services based on the service provider identifer; and
transmitting to the wireless device (210) over the wireless network (212) a service book containing a service profile having information for activating the set of services.

2. The method as claimed in claim 1 further comprising a step of checking a carrier billing identifier 'ID' to determine if the service provider has pre-provisioned the wireless device (210).

3. The method as claimed in claims 1 or claim 2 further comprising steps of:
determining whether the carrier profile requires a billing comment (250); and
appending the billing comment if required by the carrier profile and updating a customer relationship management '(CRM') database system (230).

4. The method as claimed in any one of claims 1 to 3 wherein the service profile comprises a web site address for accessing a site hosted by the provisioning system (100) for the service provider (220) to enable the wireless device (210) to download the information for activating the set of services on the wireless device (210).

5. The method as claimed in any one of claims 1 to 4 wherein the carrier identifier is stored in one or both of a mobile country code '(MCC') field and a mobile network code '(MNC') field.

6. A distributed provisioning system (224) for activating a set of services for a wireless device, the set of services specified by a service provider (220), the system comprising: a processor (120) coupled to memory (130) and an interface (150) to the wireless network (212) and adapted for implementing the method of any one of claims 1 to 5.

7. A computer program product having a computer readable medium tangibly embodying computer executable code for directing a distributed provisioning system (224) to activate a set of services for a wireless device (210), the set of services specified by a service provider system (220), said computer program product comprising: code for implementing the method of any one of claims 1 to 5.

8. A mobile wireless device (210) operable within a wireless network (212), said mobile device having a computer readable medium tangibly embodying computer code executable on a processor of said mobile device for controlling said mobile device to:
provide to a relay of a distributed provisioning system (224) a registration message (258) containing a carrier identifier for determining a carrier profile and further containing a service provider identifier for identifying a service provider (220) based on both the carrier profile and the service provider identifier; and
receive from said distributed provisioning system a service profile having information for activating a set of services specified by the service provider (220).

9. The wireless device as claimed in claim 8 wherein the computer readable medium further comprises code to check a carrier billing identifier 'ID' to determine if the service provider (220) has pre-provisioned the wireless device (210).

10. The wireless device as claimed in claims 8 or claim 9 wherein the computer readable medium further comprises code to determine whether the carrier profile requires a billing comment (250), append the billing comment if required by the carrier profile and update a customer relationship management '(CRM') database system (230).

11. The wireless device as claimed in any one of claims 8 to 10 wherein the service profile comprises a web site address for accessing a site hosted by the provisioning system (100) for the service provider (220) to enable the wireless device (210) to download the information for activating the set of services on the wireless device (210).

## Patentansprüche

1. Verfahren zum Aktivieren einer Gruppe von Diensten auf einer drahtlosen Vorrichtung (210), wobei die Gruppe von Diensten von einem Diensteanbieter (220) spezifiziert wird, wobei das Verfahren aufweist:
Empfangen, an einem Vermittlungssystem (226) eines verteilten Bereitstellungssystems (224), einer Anmeldungsnachricht (258), die von der drahtlosen Vorrichtung (210) über ein drahtloses Netzwerk (212) übertragen wird;
Weiterleiten der Anmeldungsnachricht von dem Vermittlungssystem (226) des verteilten Bereitstellungssystems (224) an ein Bereitstellungssystem (100);
Bestimmen, an dem Bereitstellungssystem (100), eines Carrier-Profils basierend auf einem in der Anmeldungsnachricht enthaltenen Carrier-Identifizierer;
Identifizieren, an dem Bereitstellungssystem (100), eines Diensteanbieters basierend auf dem Carrier-Profil und einem Diensteanbieter-Identifizierer, der in der Anmeldungsnachricht (258) enthalten ist;
Identifizieren der Gruppe von Diensten basierend auf dem Diensteanbieter-Identifizierer; und
Übertragen an die drahtlose Vorrichtung (210) über das drahtlose Netzwerk (212) eines Dienstebuchs, das ein Dienst-Profil mit Information zum Aktivieren der Gruppe von Diensten enthält.

2. Verfahren gemäß Anspruch 1, das weiter aufweist einen Schritt eines Prüfens eines Carrier-Rechnungs-Identifizierers 'ID', um zu ermitteln, ob der Diensteanbieter die drahtlose Vorrichtung (210) voreingestellt hat.

3. Verfahren gemäß Anspruch 1 oder Anspruch 2, das weiterhin die Schritte aufweist:
Bestimmen, ob das Carrier-Profil eine Rechnungs-Anmerkung erfordert (250); und
Beifügen der Rechnungs-Anmerkung, falls von dem Carrier-Profil erfordert, und Aktualisieren eines Kundenbeziehungsmanagement(CRM - customer relationship management)-Datenbanksystems (230).

4. Verfahren gemäß einem der Ansprüche 1 bis 3, wobei das Dienst-Profil aufweist eine Adresse einer Website zum Zugriff auf eine Seite, die von dem Bereitstellungssystem (100) gehostet wird für den Diensteanbieter (220), um zu ermöglichen, dass die drahtlose Vorrichtung (210) die Information zum Aktivieren der Gruppe von Diensten auf der drahtlosen Vorrichtung (210) herunterladen kann.

5. Verfahren gemäß einem der Ansprüche 1 bis 4, wobei der Carrier-Identifizierer in einem oder beiden eines mobilen Ländercode(,MCC' - mobile country code)-Felds und eines mobilen Netzwerk-Code('MNC'-mobile network code)-Felds gespeichert ist.

6. Verteiltes Bereitstellungssystem (224) für das Aktivieren einer Gruppe von Diensten für eine drahtlose Vorrichtung, wobei die Gruppe von Diensten von einem Diensteanbieter (220) spezifiziert wird, wobei das System aufweist: einen Prozessor (120), der verbunden ist mit einem Speicher (130) und einer Schnittstelle (150) zu dem drahtlosen Netzwerk (212) und ausgebildet ist zur Implementierung des Verfahrens gemäß einem der Ansprüche 1 bis 5.

7. Computerprogramm-Produkt mit einem computerlesbaren Medium, das aufweist einen Computer-ausführbaren Code zum Anweisen eines verteilten Bereitstellungssystems (224), eine Gruppe von Diensten für eine drahtlose Vorrichtung (210) zu aktivieren, wobei die Gruppe von Diensten von einem Diensteanbieter-System (220) spezifiziert wird, wobei das Computerprogramm-Produkt aufweist: Code für die Implementierung des Verfahrens gemäß einem der Ansprüche 1 bis 5.

8. Mobile drahtlose Vorrichtung (210), die betriebsfähig ist in einem drahtlosen Netzwerk (212), wobei die mobile Vorrichtung aufweist ein computerlesbares Medium, das einen Computercode aufweist, der auf einem Prozessor der mobilen Vorrichtung ausführbar ist, um die mobile Vorrichtung zu steuern, um:
an eine Vermittlung eines verteilten Bereitstellungssystems (224) eine Anmeldungsnachricht (258) vorzusehen, die einen Carrier-Identifizierer zum Ermitteln eines Carrier-Profils umfasst und weiterhin einen Diensteanbieter-Identifizierer umfasst zum Identifizieren eines Diensteanbieters (220) basierend auf sowohl dem Carrier-Profil als auch dem Diensteanbieter-Identifizierer; und
von dem verteilten Bereitstellungssystem ein Dienst-Profil zu empfangen mit Information zum Aktivieren einer Gruppe von Diensten, die von dem Diensteanbieter (220) spezifiziert wird.

9. Drahtlose Vorrichtung gemäß Anspruch 8, wobei das computerlesbare Medium weiter einen Code aufweist für das Prüfen eines Carrier-Rechnungs-Identifizierers 'ID', um zu ermitteln, ob der Diensteanbieter (220) die drahtlose Vorrichtung (210) voreingestellt hat.

10. Drahtlose Vorrichtung gemäß Anspruch 8 oder 9, wobei das computerlesbare Medium weiter einen Code aufweist, um zu ermitteln, ob das Carrier-Profil eine Rechnungs-Anmerkung (250) erfordert, um die Rechnungs-Anmerkung anzufügen, falls von dem Carrier-Profil erfordert, und um ein Kundenbeziehungsmanagement(CRM - customer relationship management)-Datenbanksystem (230) zu aktualisieren.

11. Drahtlose Vorrichtung gemäß einem der Ansprüche 8 bis 10, wobei das Dienst-Profil aufweist eine Adresse einer Website zum Zugriff auf eine Seite, die von dem Bereitstellungssystem (100) gehostet wird für den Diensteanbieter (220), um zu ermöglichen, dass die drahtlose Vorrichtung (210) die Information zum Aktivieren der Gruppe von Diensten auf der drahtlosen Vorrichtung (210) herunterladen kann.

## Revendications

1. Procédé d'activation d'un ensemble de services sur un dispositif sans fil (210), l'ensemble de services étant spécifié par un fournisseur de services (220), le procédé comprenant les étapes consistant à :
recevoir, sur un système relais (226) d'un système réparti de configuration (224), un message d'enregistrement (258) émis par le dispositif sans fil (210) sur un réseau sans fil (212) ;
acheminer le message d'enregistrement entre le système relais (226) du système réparti de configuration (224) et un système de configuration (100) ;
déterminer sur le système de configuration (100) un profil d'opérateur sur la base d'un identificateur d'opérateur contenu dans le message d'enregistrement ;
identifier sur le système de configuration (100) un fournisseur de services sur la base du profil d'opérateur et d'un identificateur de fournisseur de services contenu dans le message d'enregistrement (258) ;
identifier l'ensemble de services sur la base de l'identificateur de fournisseur de services ; et
émettre vers le dispositif sans fil (210), via le réseau sans fil (212), un livret de services contenant un profil de services comportant des informations pour l'activation de l'ensemble de services.

2. Procédé selon la revendication 1, comprenant en outre l'étape consistant à contrôler un identificateur de facturation d'opérateur pour déterminer si le fournisseur de services a préconfiguré le dispositif sans fil (210).

3. Procédé selon la revendication 1 ou la revendication 2, comprenant en outre les étapes consistant à :
déterminer si le profil d'opérateur exige un commentaire de facturation (250) ; et
ajouter le commentaire de facturation si le profil d'opérateur l'exige et mettre à jour le système de base de données de gestion des relations avec la clientèle (230).

4. Procédé selon l'une quelconque des revendications 1 à 3, dans lequel le profil de services comprend une adresse de site web afin d'accéder à un site hébergé par le système de configuration (100) pour le fournisseur de services (220), afin de permettre au dispositif sans fil (210) de télécharger les informations destinées à l'activation de l'ensemble de services sur le dispositif sans fil (210).

5. Procédé selon l'une quelconque des revendications 1 à 4, dans lequel l'identificateur d'opérateur est stocké dans un ou deux des champs suivants : champ de code de pays de mobile (MCC pour « *Mobile Country Code* ») et champ de code de réseau de mobile (MNC pour « *Mobile Network Code* »).

6. Système réparti de configuration (224) destiné à activer un ensemble de services pour un dispositif sans fil, l'ensemble de services étant spécifié par un fournisseur de services (220), le système comprenant un processeur (120) couplé à de la mémoire (130) et une interface (150) avec le réseau sans fil (212) et étant conçu pour mettre en oeuvre le procédé selon l'une quelconque des revendications 1 à 5.

7. Progiciel d'ordinateur comprenant un support lisible par ordinateur matérialisant du code exécutable pour ordinateur afin d'ordonner à un système réparti de configuration (224) d'activer un ensemble de services pour un dispositif sans fil (210), l'ensemble de services étant spécifié par un système fournisseur de services (220), ledit progiciel d'ordinateur comprenant du code pour la mise en oeuvre du procédé selon l'une quelconque des revendications 1 à 5.

8. Dispositif mobile sans fil (210) pouvant fonctionner sur un réseau sans fil (212), ledit dispositif mobile ayant un support lisible par ordinateur matérialisant du code pour ordinateur pouvant être exécuté sur un processeur dudit dispositif mobile afin de :
fournir à un relais d'un système réparti de configuration (224) un message d'enregistrement (258) contenant un identificateur d'opérateur afin de déterminer un profil d'opérateur et contenant en outre un identificateur de fournisseur de services afin d'identifier un fournisseur de services (220) sur la base à la fois du profil d'opérateur et de l'identificateur de fournisseur de services ; et
recevoir dudit système réparti de configuration un profil de services comportant des informations pour l'activation d'un ensemble de services spécifié par le fournisseur de services (220).

9. Dispositif sans fil selon la revendication 8, dans lequel le support lisible par ordinateur contient en outre du code pour contrôler un identificateur de facturation de l'opérateur, afin de déterminer si le fournisseur de services (220) a préconfiguré le dispositif sans fil (210).

10. Dispositif sans fil selon la revendication 8 ou la revendication 9, dans lequel le support lisible par ordinateur contient en outre du code pour déterminer si le profil d'opérateur exige un commentaire de facturation (250), ajouter le commentaire de facturation si le profil d'opérateur l'exige et mettre à jour le système de base de données de gestion des relations avec la clientèle (230).

11. Dispositif sans fil selon l'une quelconque des revendications 8 à 10, dans lequel le profil de services comprend une adresse de site web afin d'accéder à un site hébergé par le système de configuration (100) pour le fournisseur de services (220), afin de permettre au dispositif sans fil (210) de télécharger les informations destinées à l'activation de l'ensemble de services sur le dispositif sans fil (210).
